# EUROPÄISCHE PATENTSCHRIFT

(11) **EP 2 492 635 B1**
(45) Veröffentlichungstag und Bekanntmachung des Hinweises auf die Patenterteilung: **29.05.2013**
(21) Anmeldenummer: 11155393.9
(22) Anmeldetag: 22.02.2011
(51) Int. Cl.: G01B 21/04

(54) **Kalibrierverfahren für einen kugelförmigen Messtaster**
Calibration method for a spherical measuring probe
Procédé de calibrage pour un palpeur de mesure sphérique

(43) Veröffentlichungstag der Anmeldung: 29.08.2012
(73) Patentinhaber: Siemens Aktiengesellschaft, 80333 München (DE)
(72) Erfinder: Haase, Andreas, 09125 Chemnitz (DE); Kretschmar, Holger, 09128 Chemnitz (DE)

(56) Entgegenhaltungen:
- WO-A1-2007/068912
- WO-A1-2011/002501
- US-A1- 2003 069 709
- US-A1- 2010 250 178

## Beschreibung

Die vorliegende Erfindung betrifft ein Kalibrierverfahren für einen kugelförmigen Messtaster, der in einer um eine Spindelachse drehbaren Werkzeugspindel einer Werkzeugmaschine angeordnet ist.

Die vorliegende Erfindung betrifft weiterhin ein Computerprogramm, das Maschinencode umfasst, der von einer Steuereinrichtung für eine Werkzeugmaschine unmittelbar ausführbar ist.

Die vorliegende Erfindung betrifft weiterhin eine Steuereinrichtung für eine Werkzeugmaschine, wobei die Steuereinrichtung mit einem derartigen Computerprogramm programmiert ist.

Die vorliegende Erfindung betrifft weiterhin eine Werkzeugmaschine,
- wobei die Werkzeugmaschine eine Werkzeugspindel aufweist, die mittels eines Spindelantriebs um eine Spindelachse drehbar ist,
- wobei die Werkzeugmaschine ein Element aufweist, an dem eine Kalibrierkugel befestigbar ist,
- wobei die Werkzeugmaschine mindestens drei Achsantriebe aufweist, mittels derer die Werkzeugspindel in drei voneinander unabhängigen translatorischen Richtungen relativ zu dem Element der Werkzeugmaschine positionierbar ist,
- wobei den Achsantrieben Lagegeber zugeordnet sind, mittels derer die Position der Werkzeugspindel relativ zu dem Element der Werkzeugmaschine erfassbar ist,
- wobei die Werkzeugmaschine eine Steuereinrichtung der oben genannten Art aufweist.

Kalibrierverfahren sind in verschiedenen Ausgestaltungen bekannt.

So ist beispielsweise aus der WO 2007/068 912 A1 ein Kalibrierverfahren bekannt, bei dem ein kugelförmiger Messtaster verwendet wird, der in einer um eine Spindelachse drehbaren Werkzeugspindel einer Werkzeugmaschine angeordnet ist. Bei diesem Kalibrierverfahren wird an einem Element der Werkzeugmaschine eine Kalibrierkugel befestigt. Die Werkzeugspindel ist mittels dreier Achsantriebe der Werkzeugmaschine in drei voneinander unabhängigen translatorischen Richtungen relativ zu dem Element der Werkzeugmaschine positionierbar. Es werden vier Basismessungen vorgenommen. Die Werkzeugspindel wird bei allen vier Basismessungen in Richtung der Spindelachse gesehen konstant bei derselben Längsposition gehalten. Für jede Basismessung wird der Messtaster mittels der Achsantriebe in einer jeweiligen Querrichtung an die Kalibrierkugel herangefahren und eine jeweilige Basisposition der Werkzeugspindel relativ zu dem Element der Werkzeugmaschine erfasst, bei welcher der Messtaster die Kalibrierkugel berührt. Die vier Querrichtungen treffen sich in einer durch die Querrichtungen aufgespannten Ebene in einem gemeinsamen Punkt. Sie sind um diesen Punkt gleichmäßig verteilt. Der Messtaster wird mittels eines Spindelantriebs von Basismessung zu Basismessung jeweils um denselben Winkel um die Spindelachse gedreht, den die jeweiligen Querrichtungen miteinander bilden.

Bei der WO 2007/068 912 A1 ist die Kalibrierkugel in einer Werkstückspindel der Werkzeugmaschine gehalten. Im Rahmen der Basismessungen wird auch die Werkstückspindel jeweils um denselben Winkel gedreht, den die beiden jeweiligen Querrichtungen miteinander bilden. Anhand der Basispositionen wird ein Versatz der Spindelachse der Werkzeugspindel relativ zu einer Spindelachse der Werkstückspindel ermittelt.

Aus der WO 2007/125 306 ist ein Kalibrierverfahren bekannt, bei dem ein kugelförmiger Messtaster verwendet wird, der in einer um eine Spindelachse drehbaren Werkzeugspindel einer Werkzeugmaschine befestigt ist. Bei diesem Kalibrierverfahren wird an einem Element der Werkzeugmaschine eine Kalibrierkugel befestigt. Die Werkzeugspindel ist mittels dreier Achsantriebe der Werkzeugmaschine in drei voneinander unabhängigen translatorischen Richtungen relativ zu dem Element der Werkzeugmaschine positionierbar. Es werden vier Basismessungen vorgenommen. Anhand von im Rahmen der Basismessungen erfassten Basispositionen wird das Zentrum der Kalibrierkugel ermittelt. Für die Details der Ermittlung wird in der WO 2007/125 306 A1 auf die WO 00/25 087 A1 verwiesen.

Aus der WO 00/25 087 ist bekannt, den Messtaster aus verschiedenen Richtungen an die Kalibrierkugel heranzubewegen, jeweils die Auslenkung des Messtasters zu erfassen und anhand der erfassten Auslenkungen die Position des Kugelmittelpunkts zu bestimmen.

Aus der US 2003/069 709 A1 ist ein Kalibrierverfahren für einen kugelförmigen Messtaster bekannt, der in einer um eine Spindelachse drehbaren Spindel einer Maschine befestigt wird. Im Rahmen dieses Verfahrens wird an einem Element der Maschine eine Referenzkugel befestigt. Der Messtaster wird an vier Äquatorialpunkten und an einem Polpunkt an die Referenzkugel herangeführt. Anhand der erfassten Position wird der Mittelpunkt der Referenzkugel ermittelt.

Die Aufgabe der vorliegenden Erfindung besteht darin, Möglichkeiten zu schaffen, mittels derer auf einfache Weise eine exakte Kalibrierung des Messtasters möglich ist.

Die Aufgabe wird durch ein Kalibrierverfahren mit den Merkmalen des Anspruchs 1 gelöst. Vorteilhafte Ausgestaltungen des erfindungsgemäßen Kalibrierverfahrens sind Gegenstand der abhängigen Ansprüche 2 bis 6.

Erfindungsgemäß ist bei einem Kalibrierverfahren für einen kugelförmigen Messtaster, der in einer um eine Spindelachse drehbaren Werkzeugspindel einer Werkzeugmaschine befestigt ist, vorgesehen,
- dass an einem Element der Werkzeugmaschine eine Kalibrierkugel befestigt wird,
- dass die Werkzeugspindel mittels mindestens dreier Achsantriebe der Werkzeugmaschine in drei voneinander unabhängigen translatorischen Richtungen relativ zu dem Element der Werkzeugmaschine positionierbar ist,
- dass vier Basismessungen vorgenommen werden,
- dass die Werkzeugspindel bei allen vier Basismessungen in Richtung der Spindelachse gesehen konstant bei derselben Längsposition gehalten wird,
- dass für jede Basismessung der Messtaster mittels der Achsantriebe in einer jeweiligen Querrichtung an die Kalibrierkugel herangefahren wird und eine jeweilige Basisposition der Werkzeugspindel relativ zu dem Element der Werkzeugmaschine erfasst wird, bei welcher der Messtaster die Kalibrierkugel berührt,
- dass die vier Querrichtungen sich in einer durch die Querrichtungen aufgespannten Ebene in einem gemeinsamen Punkt treffen und um diesen Punkt gleichmäßig verteilt sind,
- dass der Messtaster mittels eines Spindelantriebs von Basismessung zu Basismessung jeweils um denselben Winkel um die Spindelachse gedreht wird, den die jeweiligen Querrichtungen miteinander bilden,
- dass die Kalibrierkugel bei allen vier Basismessungen konstant bei derselben Orientierung gehalten wird,
- dass anhand der Basispositionen eine Referenzposition der Werkzeugspindel relativ zu dem Element der Werkzeugmaschine ermittelt wird, bei welcher die Werkzeugspindel über der Kalibrierkugel steht und die Spindelachse durch den Mittelpunkt der Kalibrierkugel geht,
- dass die ermittelte Referenzposition im Rahmen der weiteren Kalibrierung des Messtasters berücksichtigt wird,
- dass nach dem Ermitteln der Referenzposition vier Zusatzmessungen vorgenommen werden,
- dass die Kalibrierkugel bei allen vier Zusatzmessungen konstant bei derselben Orientierung wie bei den Basismessungen gehalten wird,
- dass für jede Zusatzmessung der Messtaster mittels der Achsantriebe in jeweils einer der vier Querrichtungen an die Kalibrierkugel herangefahren wird und eine jeweilige Zusatzposition der Werkzeugspindel relativ zu dem Element der Werkzeugmaschine erfasst wird, bei welcher der Messtaster die Kalibrierkugel berührt,
- dass der Messtaster mittels des Spindelantriebs bei allen vier Zusatzmessungen konstant bei derselben Orientierung gehalten wird, und
- dass anhand der vier Zusatzpositionen der tatsächliche Radius des Messtasters und dessen Versatz relativ zur Spindelachse ermittelt werden.

Aufgrund des Umstands, dass zwar der Messtaster mittels des Spindelantriebs von Basismessung zu Basismessung jeweils um denselben Winkel um die Spindelachse gedreht wird, den die jeweiligen Querrichtungen miteinander bilden, die Kalibrierkugel jedoch bei allen vier Basismessungen konstant bei derselben Orientierung gehalten wird, kann die Referenzposition hochgenau ermittelt werden. Insbesondere ist völlig irrelevant, wie die Kalibrierkugel bezüglich eines Referenzortes des Elements der Werkzeugmaschine angeordnet ist. Es ist also völlig unbeachtlich, ob beispielsweise in dem Fall, dass das Element eine Werkstückspindel der Werkzeugmaschine ist, die Kalibrierkugel zentriert zur Spindelachse der Werkstückspindel angeordnet ist oder nicht.

In dem Fall, dass der Radius der Kalibrierkugel bekannt ist, kann die Genauigkeit bei der Ermittlung des Mittelpunkts der Kalibrierkugel und damit der Referenzposition dadurch verbessert werden,
- dass vor den vier Basismessungen der Messtaster mittels der Achsantriebe in Längsrichtung der Spindelachse an die Kalibrierkugel herangefahren wird und eine frühe Kontaktposition der Werkzeugspindel relativ zu dem Element der Werkzeugmaschine erfasst wird, bei welcher der Messtaster die Kalibrierkugel berührt, und
- dass der Messtaster zum Durchführen der vier Basismessungen, ausgehend von der frühen Kontaktposition, um den Radius der Kalibrierkugel zuzüglich eines hinreichenden Offsets quer zur Längsrichtung der Spindelachse verfahren und um den Radius der Kalibrierkugel zuzüglich eines geschätzten Radius des Messtasters in Längsrichtung der Spindelachse auf die Kalibrierkugel zu gefahren wird.

Die Genauigkeit bei der Kalibrierung des Messtasters kann noch weiter erhöht werden. Insbesondere ist es möglich,
- dass nach dem Ermitteln der Referenzposition die Werkzeugspindel mittels der Achsantriebe zur Referenzposition verfahren wird, sodann der Messtaster mittels der Achsantriebe in Längsrichtung der Spindelachse an die Kalibrierkugel herangefahren wird und eine späte Kontaktposition der Werkzeugspindel relativ zu dem Element der Werkzeugmaschine erfasst wird, bei welcher der Messtaster die Kalibrierkugel berührt, und
- dass die späte Kontaktposition im Rahmen der weiteren Kalibrierung des Messtasters berücksichtigt wird.

Insbesondere ist es möglich, sowohl die späte Kontaktposition als auch die vier Zusatzpositionen zu ermitteln. In diesem Fall ist eine vorteilhafte Ausgestaltung des erfindungsgemäßen Kalibrierverfahrens dadurch gegeben,
- dass die vier Zusatzmessungen nach dem Ermitteln der späten Kontaktposition vorgenommen werden und
- dass der Messtaster zum Durchführen der vier Zusatzmessungen, ausgehend von der späten Kontaktposition, mittels der Achsantriebe um den Radius der Kalibrierkugel zuzüglich eines hinreichenden Offsets quer zur Längsrichtung der Spindelachse verfahren und um den Radius der Kalibrierkugel zuzüglich eines geschätzten Radius des Messtasters in Längsrichtung der Spindelachse auf die Kalibrierkugel zu gefahren wird.

Auch der Radius des Messtasters und dessen Versatz relativ zur Spindelachse kann noch weiter ausgenutzt werden. Beispielsweise ist es möglich,
- dass nach dem Ermitteln des tatsächlichen Radius des Messtasters und dessen Versatz relativ zur Spindelachse die Werkzeugspindel mittels der Achsantriebe zu einer Position verfahren wird, bei welcher der Messtaster mittig über der Kalibrierkugel steht, sodann der Messtaster mittels der Achsantriebe in Längsrichtung der Spindelachse an die Kalibrierkugel herangefahren wird und eine letzte Kontaktposition der Werkzeugspindel relativ zu dem Element der Werkzeugmaschine erfasst wird, bei welcher der Messtaster die Kalibrierkugel berührt, und
- dass anhand der letzten Kontaktposition dessen Länge in Richtung der Spindelachse gesehen ermittelt wird.

Alternativ oder zusätzlich ist es möglich,
- dass nach dem Ermitteln des tatsächlichen Radius des Messtasters und dessen Versatz relativ zur Spindelachse der Messtaster mittels der Achsantriebe derart in Längsrichtung der Spindelachse verfahren wird, dass eine die Mittelpunkte von Messtaster und Kalibrierkugel verbindende Verbindungslinie orthogonal zur Spindelachse verläuft,
- dass die vier Zusatzmessungen sodann wiederholt werden und
- dass anhand der vier neuen Zusatzpositionen nochmals der tatsächliche Radius des Messtasters und dessen Versatz relativ zur Spindelachse ermittelt werden.

Diese Vorgehensweise führt zu besonders genauen Ergebnissen.

Die Aufgabe wird durch weiterhin ein Computerprogramm mit den Merkmalen des Anspruchs 7 gelöst. Vorteilhafte Ausgestaltungen des erfindungsgemäßen Computerprogramms sind Gegenstand der abhängigen Ansprüche 8 bis 10.

Erfindungsgemäß ist vorgesehen, dass die Ausführung des Maschinencodes durch die Steuereinrichtung bewirkt, dass die Steuereinrichtung bezüglich eines erfindungsgemäßen Kalibrierverfahrens automatisch zumindest die vier Basismessungen durchführt, die Referenzposition ermittelt, die Referenzposition im Rahmen der weiteren Kalibrierung des Messtasters berücksichtigt, nach dem Ermitteln der Referenzposition die vier Zusatzmessungen vornimmt und den Radius des Messtasters und dessen Versatz relativ zur Spindelachse ermittelt.

Das Computerprogramm kann auf einem Datenträger in maschinenlesbarer Form gespeichert sein. Der Datenträger kann beispielsweise als mobiler Datenträger ausgebildet sein. Typische Beispiele mobiler Datenträger sind USB-Memorysticks, SD-Speicherkarten, CD-ROMs usw.. Alternativ kann der Datenträger als integraler Bestandteil der Steuereinrichtung ausgebildet sein.

Die Aufgabe wird durch weiterhin eine Steuereinrichtung mit den Merkmalen des Anspruchs 13 gelöst. Erfindungsgemäß ist vorgesehen, dass die Steuereinrichtung mit einem derartigen Computerprogramm programmiert ist.

Die Aufgabe wird durch weiterhin eine Werkzeugmaschine mit den Merkmalen des Anspruchs 14 gelöst. Erfindungsgemäß ist vorgesehen, dass die Steuereinrichtung als erfindungsgemäße Steuereinrichtung ausgebildet ist.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch eine Werkzeugmaschine,
- FIG 2: ein Ablaufdiagramm,
- FIG 3: einen Ausschnitt von FIG 1,
- FIG 4: eine Schnittebene,
- FIG 5: ein Ablaufdiagramm,
- FIG 6: eine ähnliche Darstellung wie FIG 3,
- FIG 7: ein Ablaufdiagramm,
- FIG 8: eine ähnliche Darstellung wie FIG 3,
- FIG 9: ein Ablaufdiagramm,
- FIG 10: eine Schnittebene,
- FIG 11 und 12: Ablaufdiagramme,
- FIG 13: eine ähnliche Darstellung wie FIG 3 und
- FIG 14: ein Ablaufdiagramm.

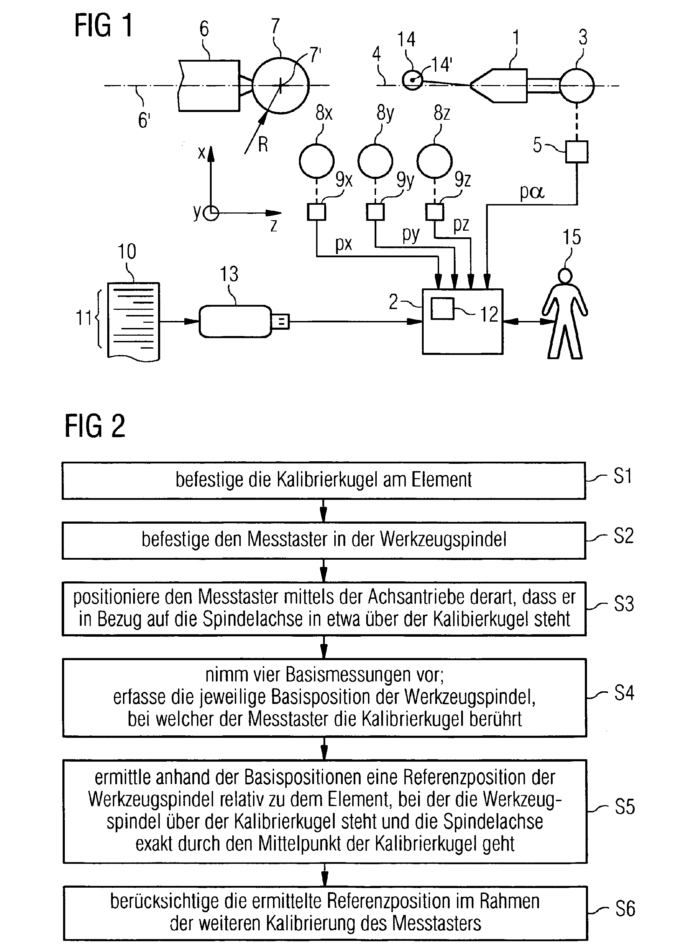

Gemäß FIG 1 weist eine Werkzeugmaschine eine Werkzeugspindel 1 auf. Die Werkzeugspindel 1 ist - gesteuert von einer Steuereinrichtung 2 der Werkzeugmaschine - mittels eines Spindelantriebs 3 um eine Spindelachse 4 drehbar. Die Drehung der Werkzeugspindel 1 erfolgt lagegeregelt. Dem Spindelantrieb 3 ist ein Lagegeber 5 zugeordnet, mittels dessen ein entsprechendes Lagesignal pα erfassbar ist und der mit der Steuereinrichtung 2 zur Übermittlung des Lagesignals pα verbunden ist.

Die Werkzeugmaschine weist weiterhin ein Element 6 auf. Es kann sich bei dem Element 6 beispielsweise um einen Werkstückhalter 6 der Werkzeugmaschine handeln. Der Werkstückhalter 6 kann um eine Werkstückachse 6' drehbar sein. Dies ist jedoch zweitrangig. Entscheidend ist, dass das Element 6 derart ausgebildet ist, dass an ihm eine Kalibrierkugel 7 - d.h. eine Kugel mit einem definierten und vorzugsweise bekannten Radius R - befestigbar ist.

Die Werkzeugmaschine weist weiterhin (mindestens) drei Achsantriebe 8x, 8y, 8z auf, mittels derer die Werkzeugspindel 1 in drei voneinander unabhängigen translatorischen Richtungen x, y, z relativ zu dem Element 6 positionierbar ist. Im Rahmen der vorliegenden Erfindung kommt es auf die Relativbewegung der Werkzeugspindel 1 relativ zum Element 6 an. Ob bezüglich eines Grundkörpers der Werkzeugmaschine die Werkzeugspindel 1 verfahren wird und das Element 6 ortsfest gehalten wird oder umgekehrt oder ob die Bewegung auf die Werkzeugspindel 1 und das Element 6 aufgeteilt wird, ist von untergeordneter Bedeutung.

Das Positionieren der Werkzeugspindel 1 erfolgt - gesteuert durch die Steuereinrichtung 2 - lagegeregelt. Den Achsantrieben 8x, 8y, 8z sind Lagegeber 9x, 9y, 9z zugeordnet, mittels derer entsprechende Lagesignale px, py, pz erfassbar sind und die mit der Steuereinrichtung 2 zur Übermittlung der Lagesignale px, py, pz verbunden sind. Die Gesamtheit der Lagesignale px, py, pz ist charakteristisch für die Position p der Werkzeugspindel 1 relativ zu dem Element 6.

Es ist möglich, dass entsprechend der Darstellung von FIG 1 eine der translatorischen Richtungen x, y, z - hier die Richtung z - parallel zur Spindelachse 4 verläuft. In diesem Fall verlaufen die beiden anderen der Richtungen x, y, z - hier die Richtungen x und y - vorzugsweise orthogonal zur Spindelachse 4. In dem Fall, dass das Element 6 ebenfalls um eine Achse 6' rotierbar ist, ist weiterhin in analoger Weise möglich, dass eine der Richtungen x, y, z parallel zu dieser Achse 6' verläuft und die beiden anderen der Richtungen x, y, z orthogonal zu dieser Achse 6' verlaufen. Weiterhin können die letztgenannte Achse 6', um die das Element 6 drehbar ist, und die Spindelachse 4 parallel verlaufen. Diese Ausgestaltungen sind jedoch nicht zwingend. Prinzipiell sind beliebige Orientierungen der Richtungen x, y, z relativ zur Spindelachse 4 und ggf. auch relativ zur Achse 6', um die das Element 6 drehbar ist, möglich. Auch ist nicht zwingend erforderlich, dass die Spindelachse 4 in einem bestimmten Winkel (beispielsweise 0° oder 90°) relativ zur Achse 6', um die das Element 6 drehbar ist, gegeben ist. Es ist eine beliebige Orientierung möglich und zulässig.

Die Steuereinrichtung 2 ist in aller Regel als softwareprogrammierbare Steuereinrichtung ausgebildet. Die Wirkungsweise der Steuereinrichtung 2 wird daher durch ein Computerprogramm 10 bestimmt, mit dem die Steuereinrichtung 2 programmiert ist.

Das Computerprogramm 10 umfasst Maschinencode 11, der von der Steuereinrichtung 2 unmittelbar ausführbar ist. Das Computerprogramm 10 kann auf einem Datenträger 12 in maschinenlesbarer - insbesondere elektronischer - Form gespeichert sein. Beispielsweise kann der Datenträger 12 als integraler Bestandteil der Steuereinrichtung 2 ausgebildet sein. Alternativ oder zusätzlich kann das Computerprogramm 10 auf einem anderen Datenträger 13 in maschinenlesbarer Form gespeichert sein. Insbesondere kann der andere Datenträger 13 als mobiler Datenträger (USB-Memorystick, SD-Speicherkarte, CD-ROM, ...) ausgebildet sein, der beispielsweise zur Ausführung des Computerprogramms 10 oder zu dessen Übertragung in die Steuereinrichtung 2 temporär mit der Steuereinrichtung 2 verbunden wird.

Aufgrund der Programmierung der Steuereinrichtung 2 mit dem Computerprogramm 10 ist die Steuereinrichtung 2 unter anderem in der Lage, einen Normalbetrieb auszuführen. Beispielsweise kann die Steuereinrichtung 2 im Normalbetrieb die Werkzeugmaschine derart steuern, dass ein (nicht dargestelltes) Werkstück in gewünschter Weise bearbeitet wird. Der Normalbetrieb ist im Rahmen der vorliegenden Erfindung von untergeordneter Bedeutung und wird daher nicht näher erläutert. Entscheidend ist lediglich, dass zur Realisierung der gewünschten Bearbeitung im Rahmen des Normalbetriebs die Werkzeugspindel 1 exakt an den gewünschten Sollpositionen relativ zum Element 6 positioniert werden muss. Zu diesem Zweck ist eine exakte Kalibrierung der Werkzeugspindel 1 relativ zum Element 6 erforderlich. Für eine exakte Kalibrierung der Werkzeugspindel 1 relativ zum Element 6 wiederum ist eine exakte Kalibrierung der zum Kalibrieren verwendeten Elemente erforderlich. Die zum Kalibrieren der Werkzeugspindel 1 relativ zum Element 6 verwendete Elemente sind zum einen die bereits erwähnte Kalibrierkugel 7, zum anderen ein Messtaster 14.

Das Kalibrieren der Werkzeugspindel 1 relativ zum Element 6 erfolgt in einem Kalibrierbetrieb (Kalibriermodus) der Werkzeugmaschine. Aufgrund der Programmierung der Steuereinrichtung 2 mit dem Computerprogramm 10 ist die Steuereinrichtung 2 ebenfalls in der Lage, die Werkzeugmaschine im Kalibriermodus zu betreiben.

Im Kalibriermodus wird zunächst der Messtaster 14 kalibriert, sodann die Werkzeugspindel 1 relativ zum Element 6. Die Kalibrierung der Werkzeugspindel 1 relativ zum Element 6 bei bereits kalibriertem Messtaster 14 ist als solche bekannt. Nachfolgend wird daher ausschließlich in den weiteren FIG - zunächst FIG 2 - die Kalibrierung des Messtasters 14 näher erläutert.

Gemäß FIG 2 wird zunächst in einem Schritt S1 die Kalibrierkugel 7 an dem Element 6 der Werkzeugmaschine befestigt. Weiterhin wird gemäß FIG 2 in einem Schritt S2 der Messtaster 14 in der Werkzeugspindel 1 befestigt. Der Messtaster 14 ist gemäß FIG 1 kugelförmig ausgebildet. Er ist als so genannter schaltender Messtaster ausgebildet.

Das Befestigen der Kalibrierkugel 7 und/oder das Befestigen des Messtasters 14 kann manuell von einem Bediener 15 der

Werkzeugmaschine (siehe FIG 1) vorgenommen werden. Alternativ kann es automatisiert von der Steuereinrichtung 2 vorgenommen werden. Die Reihenfolge der Schritte S1 und S2 ist austauschbar.

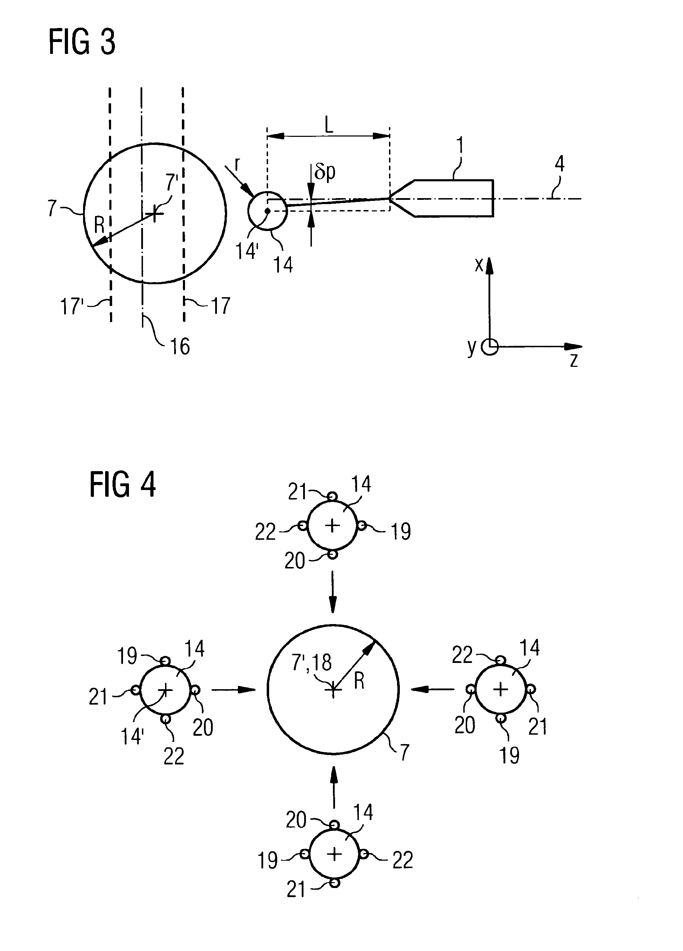

Weiterhin wird der Messtaster 14 in einem Schritt S3 mittels der Achsantriebe 8x, 8y, 8z derart positioniert, dass er in Bezug auf die Spindelachse 4 in etwa über der Kalibrierkugel 7 steht, siehe FIG 3. Diese Verfahrbewegung kann von der Steuereinrichtung 2 automatisiert oder unter Kontrolle des Bedieners 15 erfolgen.

Das Positionieren des Messtasters 14 kann, wie in FIG 3 dargestellt und nachfolgend angenommen, in einer der translatorischen Richtungen x, y, z - hier der Richtung z - der Werkzeugmaschine erfolgen. Dies ist jedoch nicht zwingend. Alternativ ist ein Positionieren aus einer beliebigen Richtung möglich. Gegebenenfalls müsste eine entsprechende Koordinatentransformation vorgenommen werden. Das Vornehmen einer Koordinatentransformation ist Fachleuten allgemein bekannt und geläufig und muss daher nicht detailliert erläutert werden.

Spätestens jetzt, also wenn der Messtaster 14 in etwa über der Kalibrierkugel 7 angeordnet ist, wird ein Kalibrierzyklus gestartet. Im Kalibrierzyklus führt die Steuereinrichtung 2 - aufgrund der Programmierung mit dem Computerprogramm 10 - automatisch einen Messzyklus aus, der nachfolgend in Verbindung mit FIG 2 weiter erläutert wird. Während des gesamten Messzyklus wird nur der Messtaster 14 relativ zur Kalibrierkugel 7 in den drei translatorischen Richtungen x, y, z positioniert und nach Bedarf die Werkzeugspindel 1 (und mit ihr der Messtaster 14) um die Spindelachse 4 gedreht. Die Kalibrierkugel 7 wird jedoch nicht rotatorisch bewegt. Sie wird also bei allen nachfolgenden Messungen konstant bei derselben Orientierung gehalten. Dies gilt sowohl für die nachfolgend erläuterten Basismessungen als auch für die nachfolgend erläuterten Zusatzmessungen.

Gemäß FIG 2 nimmt die Steuereinrichtung 2 in einem Schritt S4 vier Basismessungen vor. Bei allen vier Basismessungen wird die Werkzeugspindel 1 in Richtung der Spindelachse 4 gesehen konstant bei derselben Position gehalten, beispielsweise derart, dass ein Mittelpunkt 14' des Messtasters 14 ausschließlich in derjenigen Ebene 16 verfahren wird, die in FIG 3 strichpunktiert eingezeichnet ist. Die genaue Lage der Ebene 16 ist sekundär, wenn sie nur in etwa in der Nähe des Mittelpunkts 7' der Kalibrierkugel 7 liegt. Die Ebene 16 könnte also - rein beispielhaft - alternativ mit einer der beiden gestrichelt eingezeichneten Linien 17, 17' zusammenfallen oder irgendwo zwischen diesen beiden Linien 17, 17' liegen.

Für jede Basismessung wird der Messtaster 14 gemäß FIG 4 in einer jeweiligen Querrichtung an die Kalibrierkugel 7 herangefahren. FIG 4 zeigt die vier Querrichtungen, die in FIG 4 mit entsprechenden Pfeilen bezeichnet sind. Das Verfahren der Werkzeugspindel 1 erfolgt, bis der Messtaster 14 die Kalibrierkugel 7 berührt, der Messtaster 14 also schaltet. Die zu diesem Zeitpunkt erfasste jeweilige Position p der Werkzeugspindel 1 - nachfolgend als jeweilige Basisposition bezeichnet - wird von der Steuereinrichtung 2 gespeichert.

Die Spindelachse 4 verläuft per definitionem orthogonal zu der Ebene 16, die durch die Querrichtungen aufgespannt wird. Die Verfahrbewegungen der Werkzeugspindel 1 während der vier Basismessungen definieren daher in der betrachteten Ebene 16 jeweils eine Linie. Die Verlängerungen der Linien - im Ergebnis also die vier Querrichtungen - treffen sich in einem gemeinsamen Punkt 18. Sie sind um diesen Punkt 18 gleichmäßig verteilt.

Die oben stehend bezüglich der Ebene 16 getroffenen Aussagen sind unabhängig davon, wo entlang der Spindelachse 4 die Ebene 16 verläuft. Es kann daher ohne Beschränkung der Allgemeinheit angenommen werden, dass die Ebene 16 den Mittelpunkt 7' der Kalibrierkugel 7 enthält. Alternativ könnte der Mittelpunkt 7' der Kalibrierkugel 7 mittels einer Parallelprojektion, die parallel zur Spindelachse 4 verläuft, in die Ebene 16 abgebildet werden.

Im Idealfall ist der gemeinsame Schnittpunkt 18 der Querrichtungen mit dem Mittelpunkt 17 der Kalibrierkugel 7 identisch. Alternativ besteht ein Versatz zwischen dem Schnittpunkt 18 und dem Mittelpunkt 7'. Dies ist jedoch ohne Weiteres hinnehmbar, sofern - innerhalb der betrachteten Ebene 16 - der Abstand des Mittelpunkts 7' vom Schnittpunkt 18 relativ klein ist. Diese Bedingung ist jedoch ohne Weiteres zu erfüllen, da die Kalibrierkugel 7 in der Regel einen nennenswerten Radius R - beispielsweise rund 20 mm bis rund 80 mm - aufweist und die manuelle oder automatisierte Vorjustierung des Schrittes S3 ohne Weiteres auf wenige mm genau möglich ist.

In der Darstellung von FIG 4 ist der Messtaster 14 mit vier Markierungen 19 bis 22 versehen. Es ist möglich, dass die Markierungen 19 bis 22 Bestandteil des realen, physikalisch vorhandenen Messtasters 14 sind. Dies ist jedoch nicht erforderlich. Die Markierungen 19 bis 22 dienen lediglich dazu, weitere Merkmale der vorliegenden Erfindung besser erläutern zu können. Die Markierungen 19 bis 22 sind gleichmäßig über den Umfang des Messtasters 14 verteilt.

Wie aus FIG 4 ersichtlich ist, ist bei jeder der vier Basismessungen dieselbe Markierung 20 des Messtasters 14 der Kalibrierkugel 7 zugewandt. Der Messtaster 14 wird daher mittels des Spindelantriebs 3 von Basismessung zu Basismessung jeweils um denselben Winkel um die Spindelachse 4 gedreht, den die jeweiligen Querrichtungen der beiden Basismessungen miteinander bilden. Bei allen vier Basismessungen berührt daher der Messtaster 14 die Kalibrierkugel 7 - zumindest im Wesentlichen - mit derselben Stelle des Messtasters 14, idealerweise mit der Markierung 20. Etwaige Messfehler, die durch eine bezüglich der Spindelachse 4 nicht völlig fluchtende Befestigung des Messtasters 14 oder eine Unrundheit des Messtasters 14 herrühren können, sind daher für alle vier Basismessungen zwar möglicherweise vorhanden, weisen aber stets den gleichen Betrag und das gleiche Vorzeichen auf.

In einem Schritt S5 ermittelt die Steuereinrichtung 2 anhand der Basispositionen eine Referenzposition p* der Werkzeugspindel 1 relativ zu dem Element 6. Die Steuereinrichtung 2 ermittelt die Referenzposition p* derart, dass die Spindelachse 4 in dem Fall, dass die Werkzeugspindel 1 bei der Referenzposition p* positioniert wird, (exakt) durch den Mittelpunkt 7' der Kalibrierkugel 7 geht.

In einem Schritt S6 berücksichtigt die Steuereinrichtung 2 die ermittelte Referenzposition p* im Rahmen der weiteren Kalibrierung des Messtasters 14.

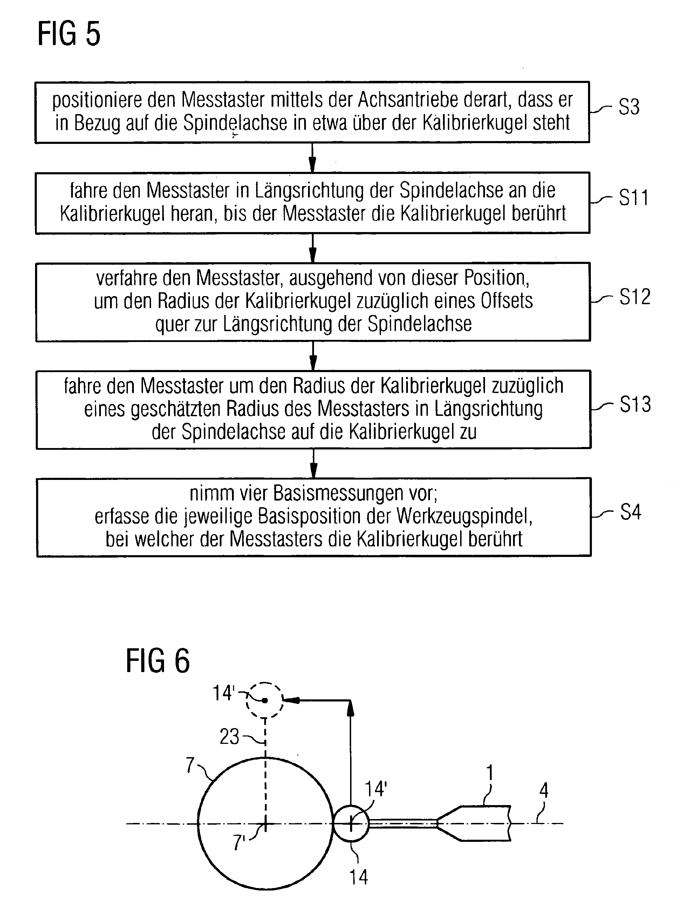

Die Genauigkeit bei der Ermittlung der Referenzposition p* ist umso besser, je geringer der Abstand der Ebene 16 vom Mittelpunkt 7' der Kalibrierkugel 7 ist. Da der Radius R der Kalibrierkugel 7 in der Regel vorab bekannt ist, kann die Vorgehensweise von FIG 2 durch eine Ausgestaltung verbessert werden, die nachfolgend in Verbindung mit den FIG 5 und 6 näher erläutert wird.

Gemäß FIG 5 sind zwischen die Schritte S3 und S4 Schritte S11 bis S13 eingeschoben. Die Schritte S11 bis S13 werden, sofern sie vorhanden sind, von der Steuereinrichtung 2 bereits automatisch vorgenommen, sind also Bestandteile des Kalibrierzyklus.

Im Schritt S11 wird der Messtaster 14 von der Steuereinrichtung 2 mittels der Achsantriebe 8x, 8y, 8z in Längsrichtung der Spindelachse 4 an die Kalibrierkugel 7 herangefahren, bis der Messtaster 14 die Kalibrierkugel 7 berührt. Diese Position der Werkzeugspindel 1 - nachfolgend frühe Kontaktposition genannt - wird erfasst und der Steuereinrichtung 2 zugeführt.

Zum Durchführen der vier Basismessungen wird der Messtaster 14 sodann im Schritt S12, ausgehend von der frühen Kontaktposition, um den Radius R der Kalibrierkugel 7 zuzüglich eines hinreichenden Offsets quer zur Längsrichtung der Spindelachse 4 verfahren. Weiterhin wird der Messtaster 14 im Schritt S13 um den Radius R der Kalibrierkugel 7 zuzüglich eines geschätzten Radius r des Messtasters 14 in Längsrichtung der Spindelachse 4 auf die Kalibrierkugel 7 zugefahren. Durch diese Vorgehensweise ist gewährleistet, dass ein Abstand der Ebene 16 vom Mittelpunkt 7' der Kalibrierkugel 7 bereits bei den Basismessungen relativ klein ist (siehe FIG 6).

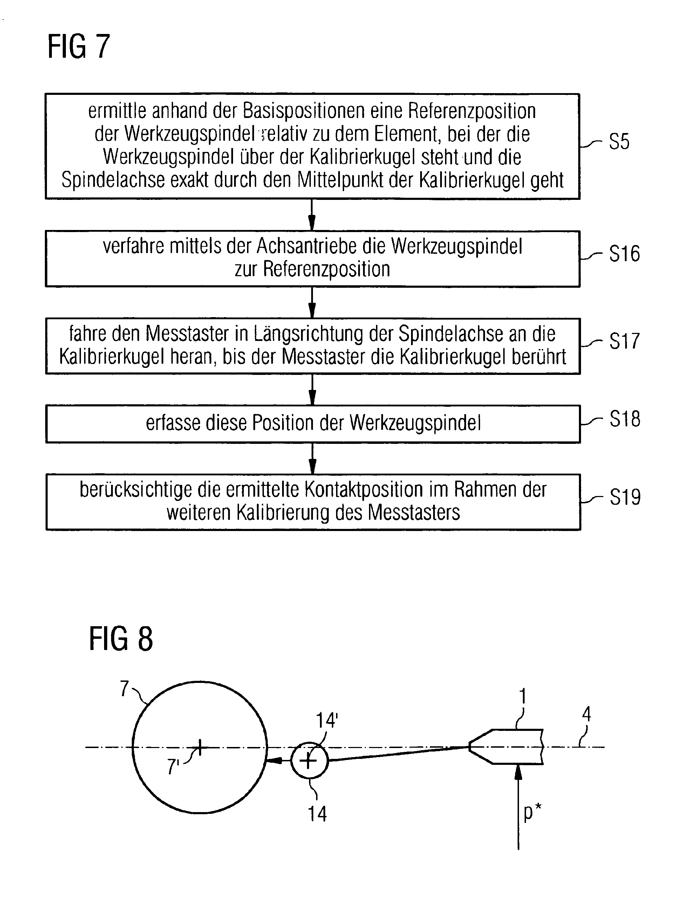

Im Rahmen der Berücksichtigung der Referenzposition p* bei der weiteren Kalibrierung des Messtasters 14 (= Schritt S6 in FIG 2) kann die Steuereinrichtung 2 beispielsweise gemäß den FIG 7 und 8 in einem Schritt S16 mittels der Achsantriebe 8x, 8y, 8z die Werkzeugspindel 1 zur Referenzposition p* verfahren, siehe FIG 8. Sodann wird der Messtaster 14 gemäß FIG 7 in einem Schritt S17 - siehe den entsprechenden Pfeil in FIG 8 - in Längsrichtung der Spindelachse 4 an die Kalibrierkugel 7 herangefahren, bis der Messtaster 14 die Kalibrierkugel 7 berührt. Diese Position p der Werkzeugspindel 1 - nachfolgend späte Kontaktposition genannt - wird in einem Schritt S18 erfasst.

In einem nachfolgenden Schritt S19 berücksichtigt die Steuereinrichtung 2 die späte Kontaktposition bei der weiteren Kalibrierung des Messtasters 14.

Der guten Ordnung halber sei erwähnt, dass der Unterschied zwischen der Vorgehensweise der FIG 5 und 6 und der Vorgehensweise der FIG 7 und 8 darin besteht, dass bei den FIG 5 und 6 die Lage des Mittelpunkts 7' der Kalibrierkugel 7 noch nicht bekannt ist und die Positionierung des Messtasters 14 daher möglicherweise nicht völlig korrekt ist.

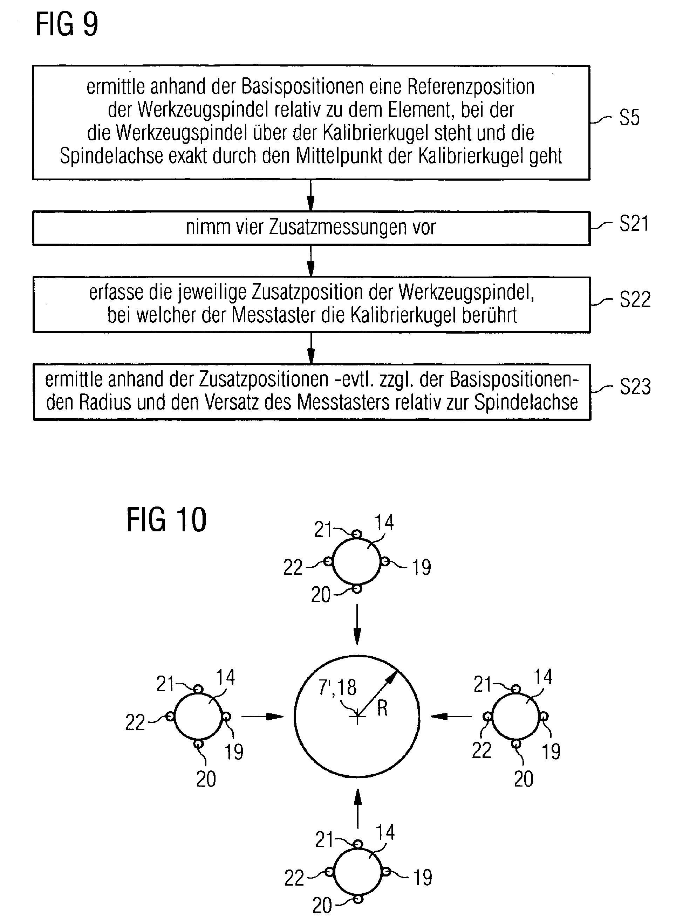

Wie aus FIG 3 ersichtlich ist, kann es geschehen, dass der Messtaster 14 (genau genommen dessen Mittelpunkt 14') in Bezug auf die Spindelachse 4 nicht exakt zentriert ist, sondern einen Versatz δp aufweist. Insbesondere ein derartiger Versatz δp kann Messfehler verursachen, die nachfolgend bei der Kalibrierung der Werkzeugspindel 1 relativ zum Element 6 störend sind. Auch ist der genaue Radius r des Messtasters 14 noch nicht bekannt. In einer bevorzugten Ausgestaltung der vorliegenden Erfindung werden daher gemäß den FIG 9 und 10 nach dem Ermitteln der Referenzposition p* in einem Schritt S21 vier Zusatzmessungen vorgenommen. Analog zu den Basismessungen wird auch bei den Zusatzmessungen der Messtaster 14 mittels der Achsantriebe 8x, 8y, 8z in jeweils einer der vier Querrichtungen an die Kalibrierkugel 7 herangefahren, bis der Messtaster 14 die Kalibrierkugel 7 berührt. Die zu diesem Zeitpunkt jeweils erfasste Zusatzposition der Werkzeugspindel 1 relativ zu dem Element 6 der Werkzeugmaschine wird von der Steuereinrichtung 2 in einem Schritt S22 erfasst und ebenfalls von der Steuereinrichtung 2 gespeichert. Der Unterschied zwischen den Basismessungen und den Zusatzmessungen besteht darin, dass der Messtaster 14 bei den Zusatzmessungen mittels des Spindelantriebs 3 bei allen vier Zusatzmessungen konstant bei ein und derselben - prinzipiell beliebigen - Orientierung gehalten wird. Während also bei den Basismessungen der Messtaster 14 mitgedreht wird, ist dies bei den Zusatzmessungen nicht der Fall.

Die vier bei den Zusatzmessungen erfassten Zusatzpositionen berücksichtigt die Steuereinrichtung 2 in einem Schritt S23 bei der weiteren Kalibrierung des Messtasters 14. Insbesondere kann die Steuereinrichtung 2 - siehe den Schritt S23 in FIG 9 - anhand der vier Zusatzpositionen den tatsächlichen Radius r des Messtasters 14 und dessen Versatz δp relativ zur Spindelachse 4 ermitteln. Der Radius r des Messtasters 14 und dessen Versatz δp relativ zur Spindelachse 4 stellen wesentliche Kalibriergrößen des Messtasters 14 dar.

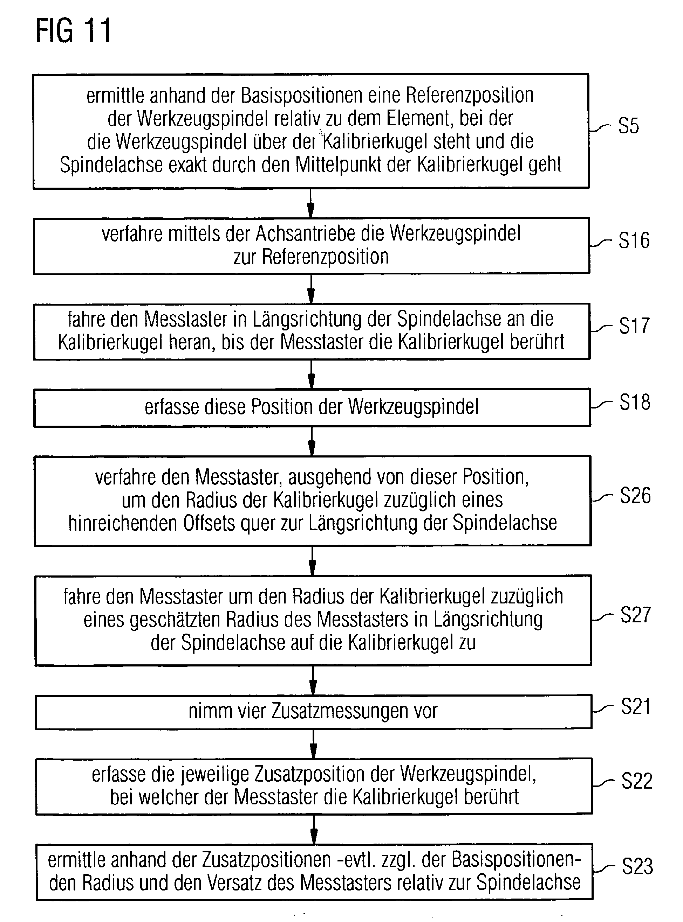

Es ist auch möglich, die Vorgehensweisen der FIG 7 und 8 einerseits und der FIG 9 und 10 andererseits miteinander zu kombinieren. Dieser Fall wird nachstehend in Verbindung mit FIG 11 näher erläutert.

Gemäß FIG 11 werden zunächst die Schritte S16 und S17 - evtl. zuzüglich des Schrittes S18 - von FIG 7 ausgeführt. Sodann wird der Messtaster 14 in einem Schritt S26, ausgehend von der späten Kontaktposition, mittels der Achsantriebe 8x, 8y, 8z um den Radius R der Kalibrierkugel 7 zuzüglich eines hinreichenden Offsets quer zur Längsrichtung der Spindelachse 4 verfahren. Weiterhin wird der Messtaster 14 mittels der Achsantriebe 8x, 8y, 8z in einem Schritt S27 um den Radius R der Kalibrierkugel 7 zuzüglich eines geschätzten Radius r des Messtasters 14 in Längsrichtung der Spindelachse 4 auf die Kalibrierkugel 7 zugefahren. Daran anschließend werden die Schritte S21 bis S23 von FIG 9 ausgeführt. Insbesondere werden die Schritte S21 und S22 somit in derjenigen Ebene 16 durchgeführt, in die der Mittelpunkt 14' des Messtasters 14 im Schritt S27 verfahren wurde.

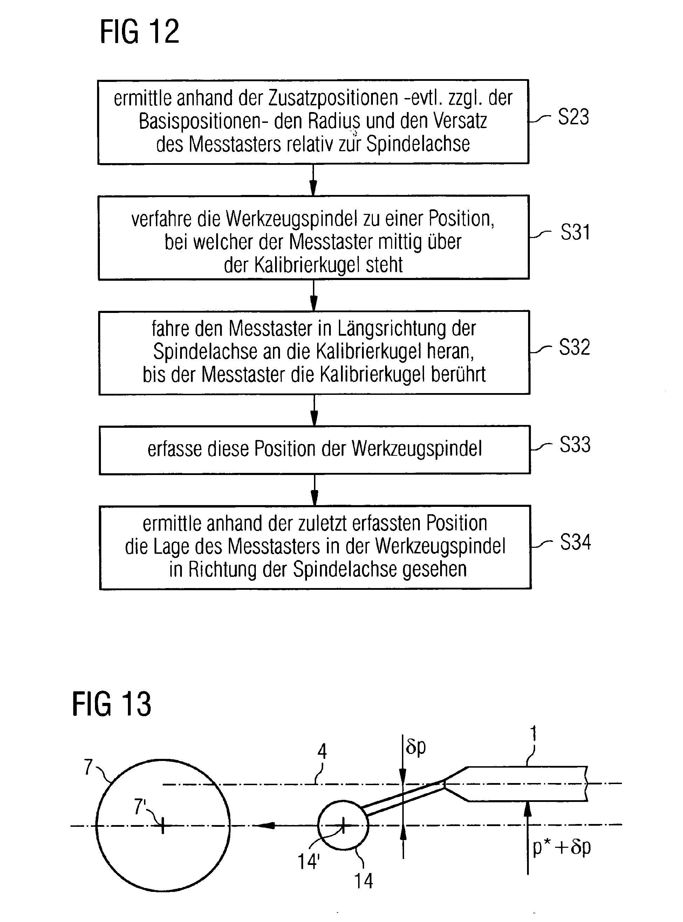

Zur weiteren Kalibrierung des Messtasters 14, also aufbauend auf dem Schritt S23, ist es beispielsweise möglich, gemäß FIG 12 in einem Schritt S31 die Werkzeugspindel 1 zu einer Position verfahren, bei welcher der Messtaster 14 mittig über der Kalibrierkugel 7 steht. Dies ist nunmehr möglich, weil nicht nur die Referenzposition p* bekannt ist, sondern auch der Versatz δp. Die entsprechende Positionierung des Messtasters 14 ist in FIG 13 dargestellt.

Sodann wird der Messtaster 14 in einem Schritt S32 in Längsrichtung der Spindelachse 4 an die Kalibrierkugel 7 herangefahren, bis der Messtaster 14 die Kalibrierkugel 7 berührt. Diese Position p der Werkzeugspindel 1 - nachfolgend letzte Kontaktposition genannt - wird in einem Schritt S33 erfasst. In einem Schritt S34 ermittelt die Steuereinrichtung 2 anhand der letzten Kontaktposition die Länge L des Messtasters 14 in Richtung der Spindelachse 4 gesehen.

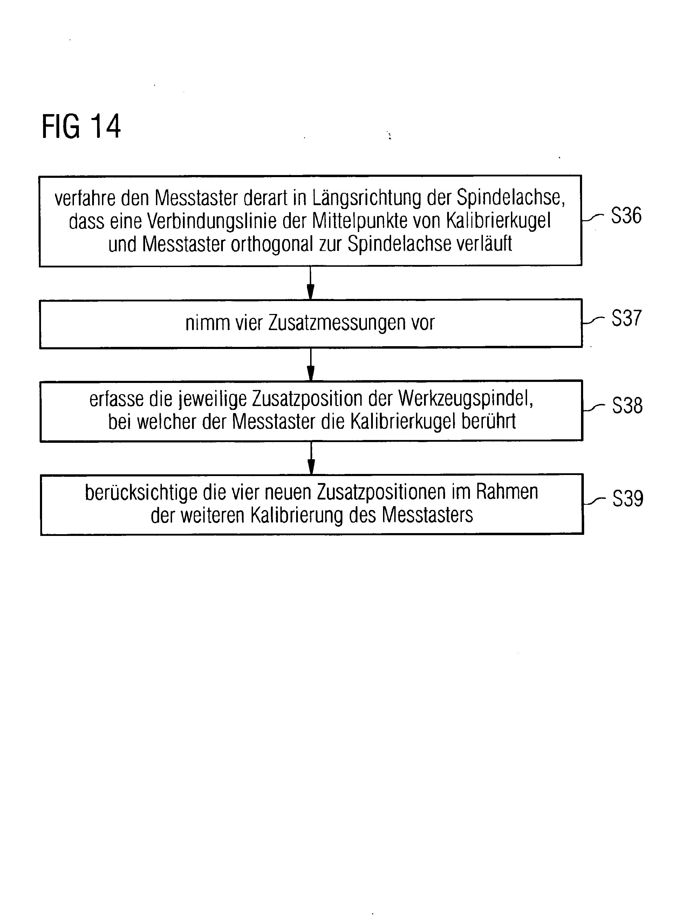

Die vorstehend beschriebene Kalibrierung des Messtasters ist bereits sehr genau. Sie kann jedoch noch weiter erhöht werden. Dies wird nachfolgend in Verbindung mit FIG 14 näher erläutert.

Gemäß FIG 14 werden zwischen den Schritten S23 und S31 Schritte S36 bis S39 ausgeführt. Im Schritt S36 wird der Messtaster 14 mittels der Achsantriebe 8x, 8y, 8z derart in Längsrichtung der Spindelachse 4 verfahren, dass eine die Mittelpunkte 7', 14' von Kalibrierkugel 7 und Messtaster 14 verbindende Verbindungslinie 23 (siehe FIG 6) orthogonal zur Spindelachse 4 verläuft.

Sodann werden die Schritte S37 und S38 ausgeführt. Die Schrittes S37 und S38 korrespondieren inhaltlich mit den Schritten S21 und S22 von FIG 9. Im Rahmen der Schritte S37 und S38 werden somit die vier Zusatzmessungen wiederholt.

Im Schritt S39 werden die vier neuen Zusatzpositionen im Rahmen der weiteren Kalibrierung des Messtasters 14 berücksichtigt. Insbesondere kann nochmals - diesmal jedoch mit besserer Realitätstreue - anhand der vier Zusatzpositionen der tatsächliche Radius r des Messtasters 14 und dessen Versatz δp relativ zur Spindelachse 4 ermittelt werden.

Die vorliegende Erfindung weist viele Vorteile auf. Insbesondere ist sie leicht zu implementieren, arbeitet zuverlässig und liefert überlegene Resultate.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Kalibrierverfahren für einen kugelförmigen Messtaster (14), der in einer um eine Spindelachse (4) drehbaren Werkzeugspindel (1) einer Werkzeugmaschine befestigt ist,
- wobei an einem Element (6) der Werkzeugmaschine eine Kalibrierkugel (7) befestigt wird,
- wobei die Werkzeugspindel (1) mittels mindestens dreier Achsantriebe (8x, 8y, 8z) der Werkzeugmaschine in drei voneinander unabhängigen translatorischen Richtungen (x, y, z) relativ zu dem Element (6) der Werkzeugmaschine positionierbar ist,
- wobei vier Basismessungen vorgenommen werden,
- wobei die Werkzeugspindel (1) bei allen vier Basismessungen in Richtung der Spindelachse (4) gesehen konstant bei derselben Längsposition gehalten wird,
- wobei für jede Basismessung der Messtaster (14) mittels der Achsantriebe (8x, 8y, 8z) in einer jeweiligen Querrichtung an die Kalibrierkugel (7) herangefahren wird und eine jeweilige Basisposition der Werkzeugspindel (1) relativ zu dem Element (6) der Werkzeugmaschine erfasst wird, bei welcher der Messtaster (14) die Kalibrierkugel (7) berührt,
- wobei die vier Querrichtungen sich in einer durch die Querrichtungen aufgespannten Ebene (16) in einem gemeinsamen Punkt (18) treffen und um diesen Punkt (18) gleichmäßig verteilt sind,
- wobei der Messtaster (14) mittels eines Spindelantriebs (3) von Basismessung zu Basismessung jeweils um denselben Winkel um die Spindelachse (4) gedreht wird, den die jeweiligen Querrichtungen miteinander bilden,
- wobei die Kalibrierkugel (7) bei allen vier Basismessungen konstant bei derselben Orientierung gehalten wird,
- wobei anhand der Basispositionen eine Referenzposition (p*) der Werkzeugspindel (1) relativ zu dem Element (6) der Werkzeugmaschine ermittelt wird, bei welcher die Werkzeugspindel (1) über der Kalibrierkugel (7) steht und die Spindelachse (4) durch den Mittelpunkt (7') der Kalibrierkugel (7) geht,
- wobei die ermittelte Referenzposition (p*) im Rahmen der weiteren Kalibrierung des Messtasters (14) berücksichtigt wird,
- wobei nach dem Ermitteln der Referenzposition (p*) vier Zusatzmessungen vorgenommen werden,
- wobei die Kalibrierkugel (7) bei allen vier Zusatzmessungen konstant bei derselben Orientierung wie bei den Basismessungen gehalten wird,
- wobei für jede Zusatzmessung der Messtaster (14) mittels der Achsantriebe (8x, 8y, 8z) in jeweils einer der vier Querrichtungen an die Kalibrierkugel (7) herangefahren wird und eine jeweilige Zusatzposition der Werkzeugspindel (1) relativ zu dem Element (6) der Werkzeugmaschine erfasst wird, bei welcher der Messtaster (14) die Kalibrierkugel (7) berührt,
- wobei der Messtaster (14) mittels des Spindelantriebs (3) bei allen vier Zusatzmessungen konstant bei derselben Orientierung gehalten wird und
- wobei anhand der vier Zusatzpositionen der tatsächliche Radius (r) des Messtasters (14) und dessen Versatz (δp) relativ zur Spindelachse (4) ermittelt werden.

2. Kalibrierverfahren nach Anspruch 1,
**dadurch gekennzeichnet,**
- **dass** der Radius (R) der Kalibrierkugel (7) bekannt ist,
- **dass** vor den vier Basismessungen der Messtaster (14) mittels der Achsantriebe (8x, 8y, 8z) in Längsrichtung der Spindelachse (4) an die Kalibrierkugel (7) herangefahren wird und eine frühe Kontaktposition der Werkzeugspindel (1) relativ zu dem Element (6) der Werkzeugmaschine erfasst wird, bei welcher der Messtaster (14) die Kalibrierkugel (7) berührt, und
- **dass** der Messtaster (14) zum Durchführen der vier Basismessungen, ausgehend von der frühen Kontaktposition, um den Radius (R) der Kalibrierkugel (7) zuzüglich eines hinreichenden Offsets quer zur Längsrichtung der Spindelachse (4) verfahren und um den Radius (R) der Kalibrierkugel (7) zuzüglich eines geschätzten Radius (r) des Messtasters (14) in Längsrichtung der Spindelachse (4) auf die Kalibrierkugel (7) zu gefahren wird.

3. Kalibrierverfahren nach Anspruch 1 oder 2, **dadurch gekennzeichnet,**
- **dass** nach dem Ermitteln der Referenzposition (p*) die Werkzeugspindel (1) mittels der Achsantriebe (8x, 8y, 8z) zur Referenzposition (p*) verfahren wird, sodann der Messtaster (14) mittels der Achsantriebe (8x, 8y, 8z) in Längsrichtung der Spindelachse (4) an die Kalibrierkugel (7) herangefahren wird und eine späte Kontaktposition der Werkzeugspindel (1) relativ zu dem Element (6) der Werkzeugmaschine erfasst wird, bei welcher der Messtaster (14) die Kalibrierkugel (7) berührt, und
- **dass** die späte Kontaktposition im Rahmen der weiteren Kalibrierung des Messtasters (14) berücksichtigt wird.

4. Kalibrierverfahren nach Anspruch 3,
**dadurch gekennzeichnet,**
- **dass** die vier Zusatzmessungen nach dem Ermitteln der späten Kontaktposition vorgenommen werden und
- **dass** der Messtaster (14) zum Durchführen der vier Zusatzmessungen, ausgehend von der späten Kontaktposition, mittels der Achsantriebe (8x, 8y, 8z) um den Radius (R) der Kalibrierkugel (7) zuzüglich eines hinreichenden Offsets quer zur Längsrichtung der Spindelachse (4) verfahren und um den Radius (R) der Kalibrierkugel (7) zuzüglich eines geschätzten Radius (r) des Messtasters (14) in Längsrichtung der Spindelachse (4) auf die Kalibrierkugel (7) zu gefahren wird.

5. Kalibrierverfahren nach einem der obigen Ansprüche, **dadurch gekennzeichnet,**
- **dass** nach dem Ermitteln des tatsächlichen Radius (r) des Messtasters (14) und dessen Versatz (δp) relativ zur Spindelachse (4) die Werkzeugspindel (1) mittels der Achsantriebe (8x, 8y, 8z) zu einer Position verfahren wird, bei welcher der Messtaster (14) mittig über der Kalibrierkugel (7) steht, sodann der Messtaster (14) mittels der Achsantriebe (8x, 8y, 8z) in Längsrichtung der Spindelachse (4) an die Kalibrierkugel (7) herangefahren wird und eine letzte Kontaktposition der Werkzeugspindel (1) relativ zu dem Element (6) der Werkzeugmaschine erfasst wird, bei welcher der Messtaster (14) die Kalibrierkugel (7) berührt, und
- **dass** anhand der letzten Kontaktposition dessen Länge (L) in Richtung der Spindelachse (4) gesehen ermittelt wird.

6. Kalibrierverfahren nach einem der obigen Ansprüche, **dadurch gekennzeichnet,**
- **dass** nach dem Ermitteln des tatsächlichen Radius (r) des Messtasters (14) und dessen Versatz (δp) relativ zur Spindelachse (4) der Messtaster (14) mittels der Achsantriebe (8x, 8y, 8z) derart in Längsrichtung der Spindelachse (4) verfahren wird, dass eine die Mittelpunkte (14', 7') von Messtaster (14) und Kalibrierkugel (7) verbindende Verbindungslinie (23) orthogonal zur Spindelachse (4) verläuft,
- **dass** die vier Zusatzmessungen sodann wiederholt werden und
- **dass** anhand der vier neuen Zusatzpositionen nochmals der tatsächliche Radius (r) des Messtasters (14) und dessen Versatz (δp) relativ zur Spindelachse (4) ermittelt werden.

7. Computerprogramm, das Maschinencode (11) umfasst, der von einer Steuereinrichtung (2) für eine Werkzeugmaschine unmittelbar ausführbar ist und dessen Ausführung durch die Steuereinrichtung (2) bewirkt, dass die Steuereinrichtung (2) bezüglich eines Kalibrierverfahrens nach einem der obigen Ansprüche automatisch zumindest die vier Basismessungen durchführt, die Referenzposition (p*) ermittelt, die Referenzposition (p*) im Rahmen der weiteren Kalibrierung des Messtasters (14) berücksichtigt, nach dem Ermitteln der Referenzposition (p*) die vier Zusatzmessungen vornimmt und den Radius (r) des Messtasters (14) und dessen Versatz (δp) relativ zur Spindelachse (4) ermittelt.

8. Computerprogramm nach Anspruch 7,
**dadurch gekennzeichnet, dass** es auf einem Datenträger (12, 13) in maschinenlesbarer Form gespeichert ist.

9. Computerprogramm nach Anspruch 8,
**dadurch gekennzeichnet, dass** der Datenträger (13) als mobiler Datenträger (13) ausgebildet ist.

10. Computerprogramm nach Anspruch 8,
**dadurch gekennzeichnet, dass** der Datenträger (12) als integraler Bestandteil der Steuereinrichtung (2) ausgebildet ist.

11. Steuereinrichtung für eine Werkzeugmaschine, **dadurch gekennzeichnet, dass** die Steuereinrichtung mit einem Computerprogramm (10) nach Anspruch 7 programmiert ist.

12. Werkzeugmaschine,
- wobei die Werkzeugmaschine eine Werkzeugspindel (1) aufweist, die mittels eines Spindelantriebs (3) um eine Spindelachse (4) drehbar ist,
- wobei die Werkzeugmaschine ein Element (6) aufweist, an dem eine Kalibrierkugel (7) befestigbar ist,
- wobei die Werkzeugmaschine mindestens drei Achsantriebe (8x, 8y, 8z) aufweist, mittels derer die Werkzeugspindel (1) in drei voneinander unabhängigen translatorischen Richtungen (x, y, z) relativ zu dem Element (6) der Werkzeugmaschine positionierbar ist,
- wobei den Achsantrieben (8x, 8y, 8z) Lagegeber (9x, 9y, 9z) zugeordnet sind, mittels derer die Position (p) der Werkzeugspindel (1) relativ zu dem Element (6) der Werkzeugmaschine erfassbar ist,
- wobei die Werkzeugmaschine eine Steuereinrichtung (2) nach Anspruch 11 aufweist.

## Claims

1. Calibration method for a spherical measurement probe (14), which is fastened into a tool spindle (1) of a machine tool able to be rotated around a spindle axis (4),
- wherein a calibration sphere (7) is fastened to an element (6) of the machine tool,
- wherein the tool spindle (1) is able to be positioned by means of at least three axis drives (8x, 8y, 8z) of the machine tool in three translational directions (x, y, z) independent of one another relative to the element (6) of the machine tool,
- wherein four basic measurements are carried out,
- wherein the tool spindle (1) for all four basic measurements, viewed in the direction of the spindle axis (4) is held constantly at the same longitudinal position,
- wherein for each basic measurement, the measurement probe (14) is driven by means of the axis drives (8x, 8y, 8z) in a respective transverse direction towards the calibration sphere (7) and a respective basic position of the tool spindle (1) relative to the element (6) of the machine tool is detected at which the measurement probe (14) touches the calibration sphere (7),
- wherein the four transverse directions meet in a plane (16) spanned by the transverse directions in a common point (18) and are evenly distributed around this point (18),
- wherein the measurement probe (14) is rotated by means of a spindle drive (3) from basic measurement to basic measurement in each case by the same angle around the spindle axis (4) that the respective transverse directions form with one another,
- wherein the calibration sphere (7) is held constantly at the same orientation for all four basic measurements,
- wherein, on the basis of the basic positions, a reference position (p*) of the tool spindle (1) relative to the element (6) of the machine tool is determined at which the tool spindle (1) is located above the calibration sphere (7) and the spindle axis (4) goes through the central point (17) of the calibration sphere (7), and
- wherein the determined reference position (p*) is taken into account within the framework of the further calibration of the measurement probe (14),
- after the determination of the reference position (p*) four additional measurements are carried out,
- wherein for all four additional measurements the calibration sphere (7) is held constant at the same orientation as for the basic measurements,
- for each additional measurement the measurement probe (14) is driven by means of the axis drives (8x, 8y, 8z) in one of the four respective transverse directions towards the calibration sphere (7) and a respective additional position of the tool spindle (1) relative to the element (6) of the machine tool is detected at which the measurement probe (14) is touching the calibration sphere (7),
- wherein the measurement probe (14) is held by means of the spindle drive (3) for all four additional measurements constant at the same orientation and
- wherein on the basis of the four additional positions the actual radius (r) of the measurement probe (14) and its offset (δp) relative to the spindle axis (4) are determined.

2. Calibration method according to claim 1,
**characterised in that**
- the radius (R) of the calibration sphere (7) is known,
- before the four basic measurements the measurement probe (14) is driven by means of the axis drives (8x, 8y, 8z) in the longitudinal direction of the spindle axis (4) towards the calibration sphere (7) and an early contact position of the tool spindle (1) relative to the element (6) of the machine tool is detected at which the measurement probe (14) touches the calibration sphere (7), and
- the measurement probe (14), to carry out the four basic measurements, starting from the early contact position, is driven by the radius (R) of the calibration sphere (7) plus a suitable offset transverse to the longitudinal direction of the spindle axis (4) and is driven by the radius (R) of the calibration sphere (7) plus an estimated radius (r) of the measurement probe (14) in the longitudinal direction of the spindle axis (4) towards the calibration sphere (7).

3. Calibration method according to claim 1 or 2,
**characterised in that**
- after the determination of the reference position (p*), the tool spindle (1) is driven by means of the axis drives (8x, 8y, 8z) to the reference position (p*), then the measurement probe (14) is driven by means of the axis drives (8x, 8y, 8z) in the longitudinal direction of the spindle axis (4) towards the calibration sphere (7) and a late contact position of the tool spindle (1) relative to the element (6) of the machine tool is detected at which the measurement probe (14) touches the calibration sphere (7), and
- the late contact position is taken into account within the framework of the further calibration of the measurement probe (14).

4. Calibration method according to claim 3,
**characterised in that**
- the four additional measurements are carried out after the determination of the late contact position and
- the measurement probe (14) for carrying out the four additional measurements, starting from the late contact position, is driven by means of the axis drives (8x, 8y, 8z) by the radius (R) of the calibration sphere (7) plus a sufficient offset transverse to the longitudinal direction of the spindle axis (4) and by the radius (R) of the calibration sphere (7) plus an estimated radius (r) of the measurement probe (14) in the longitudinal direction of the spindle axis (4) towards the calibration sphere (7).

5. Calibration method according to one of the preceding claims,
**characterised in that**,
- after the determination of the actual radius (r) of the measurement probe (14) and its offset (δp) relative to the spindle axis (4) the tool spindle (1) is driven by means of the axis drives (8x, 8y, 8z) to a position in which the measurement probe (14) is located centrally above the calibration sphere (7), then the measurement probe (14) is driven by means of the axis drives (8x, 8y, 8z) in the longitudinal direction of the spindle axis (4) towards the calibration sphere (7) and a last contact position of the tool spindle (1) relative to the element (6) of the machine tool is detected at which the measurement probe (14) is touching the calibration sphere (7), and
- wherein on the basis of the last contact position, its length (L) is determined, viewed in the direction of the spindle axis (4).

6. Calibration method according to one of the above claims, **characterised in that**,
- after the determination of the actual radius (r) of the measurement probe (14) and its offset (δp) relative to the spindle axis (4) the measurement probe (14) is driven by means of the axis drives (8x, 8y, 8z) in the longitudinal direction of the spindle axis (4) such that a connecting line (23) connecting the central points (14', 17) of measurement probe (14) and calibration sphere (7) runs orthogonally to the spindle axis (4),
- the four additional measurements are then repeated and
- on the basis of the four additional positions the actual radius (r) of the measurement probe (14) and its offset (δp) relative to the spindle axis (4) are determined again.

7. Computer program comprising machine code (11) which is able to be executed directly by a control device (2) for a machine tool and the execution of which by the control device (2) causes the control device (2) in relation to a calibration method to carry out at least the four basic measurements automatically in accordance with one of the above claims, to determine the reference position (p*) and to take account of the reference position (p*) within the framework of the further calibration of the measurement probe (14), after the determination of the reference position (p*) to carry out four additional measurements and to determine the radius (r) of the measurement probe (14) and its offset (δp) relative to the spindle axis (4).

8. Computer program according to claim 7,
**characterised in that** it is stored on a data medium (12, 13) in machine-readable form.

9. Computer program according to claim 8,
**characterised in that** the data medium (13) is embodied as a mobile data medium (13).

10. Computer program according to claim 8,
**characterised in that** the data medium (12) is embodied as an integral component of the control device (2).

11. Control device for a machine tool,
**characterised in that** the control device is programmed with a computer program (10) according to claim 7.

12. Machine tool
- wherein the machine tool has a tool spindle (1) which is able to be rotated by means of a spindle drive (3) around a spindle axis (4),
- wherein the machine tool has an element (6) to which a calibration sphere (7) is able to be fastened,
- wherein the machine tool has at least three axis drives (8x, 8y, 8z) by means of which the tool spindle (1) is able to be positioned in three translational directions (x, y, z) independent of one another relative to the element (6) of the machine tool,
- wherein the axis drives (8x, 8y, 8z) are assigned position sensors (9x, 9y, 9z), by means of which the position (p) of the tool spindle (1) relative to the element (6) of the machine tool is able to be detected,
- wherein the machine tool has a control device (2) according to claim 11.

## Revendications

1. Procédé de calibrage d'un palpeur (14) de mesure sphérique, qui est fixé dans une broche (1) d'outil, pouvant tourner autour d'un axe (4) de broche, d'une machine-outil,
- dans lequel on fixe une bille (7) de calibrage sur un élément (6) de la machine-outil,
- dans lequel la broche (1) d'outil peut être mise en position par rapport à l'élément (6) de la machine-outil au moyen d'au moins trois entraînements (8x, 8y, 8z) d'axe de la machine-outil dans trois directions (x, y, z) en translation indépendantes l'une de l'autre,
- dans lequel on effectue quatre mesures de base,
- dans lequel on maintient, considéré dans la direction de l'axe (4) de la broche, constamment dans la même position longitudinale, la broche (1) d'outil dans toutes les quatre mesures de base,
- dans lequel, pour chaque mesure de base, on fait s'approcher le palpeur (14) de mesure au moyen des entraînements (8x, 8y, 8z) d'axe dans une direction transversale respectivement de la bille (7) de calibrage et on détecte une position de base respective de la broche (1) d'outil par rapport à l'élément (6) de la machine-outil, pour laquelle le palpeur (14) de mesure touche la bille (7) de calibrage,
- dans lequel les quatre directions transversales se rencontrent en un point (18) commun dans un plan (16) passant par les directions transversales et sont réparties uniformément autour de ce point (18),
- dans lequel on fait tourner le palpeur (14) de mesure au moyen d'un entraînement (3) de broche d'une mesure de base à l'autre respectivement du même angle autour de l'axe (4) de la broche que forment entre elles les directions transversales respectives,
- dans lequel on maintient la bille (7) de calibrage constamment dans la même orientation dans toutes les quatre mesures de base,
- dans lequel, au moyen des positions de base, on détermine une position (p* ) de référence de la broche (1) d'outil par rapport à l'élément (6) de la machine-outil, pour laquelle la broche (1) d'outil est au-dessus de la bille (7) de calibrage et pour laquelle l'axe (4) de la broche passe par le centre (7') de la bille (7) de calibrage,
- dans lequel on prend en compte la position (p*) de référence déterminée dans le cadre de l'autre calibrage du palpeur (14) de mesure,
- dans lequel, après la détermination de la position (p*) de référence, on effectue quatre mesures supplémentaires,
- dans lequel on maintient la bille (7) de calibrage dans toutes les quatre mesures supplémentaires constamment dans la même orientation que dans les mesures de base,
- dans lequel, pour chaque mesure supplémentaire, on fait s'approcher de la bille (7) de calibrage le palpeur (14) de mesure au moyen des entraînements (8x, 8y, 8z) d'axe dans respectivement l'une des quatre directions transversales et on détecte une position supplémentaire respective de la broche (1) d'outil par rapport à l'élément (6) de la machine-outil, dans laquelle le palpeur (14) de mesure touche la bille (7) de calibrage,
- dans lequel on maintient constamment dans la même orientation le palpeur (14) de mesure au moyen de l'entraînement (3) de broche dans toutes les quatre mesures supplémentaires et
- dans lequel on détermine, au moyen des quatre positions supplémentaires, le rayon (r) réel du palpeur (14) de mesure et son décalage (δp) par rapport à l'axe (4) de la broche (6).

2. Procédé de calibrage suivant la revendication 1, **caractérisé**
- **en ce que** le rayon (R) de la bille (7) de calibrage est connu,
- **en ce qu'**avant les quatre mesures de base on approche de la bille (7) de calibrage dans la direction longitudinale de l'axe (4) de la broche le palpeur (14) de mesure au moyen des axes (8x, 8y, 8z) d'entraînement et on détermine une position de contact précoce de la broche (1) de l'outil par rapport à l'élément (6) de la machine-outil, dans laquelle le palpeur (14) de mesure touche la bille (7) de calibrage, et
- **en ce que**, pour effectuer les quatre mesures de base, on déplace transversalement à la direction longitudinale de l'axe (4) de la broche le palpeur (14) de mesure, en partant de la position de contact précoce, du rayon (R) de la bille (7) de calibrage dans la direction longitudinale de l'axe (4) de la broche, additionné d'un décalage suffisant et on le rapproche de la bille (7) de calibrage du rayon (R) de la bille (7) de calibrage, additionné d'un rayon (r) estimé du palpeur (14) de mesure.

3. Procédé de calibrage suivant la revendication 1 ou 2, **caractérisé**
- **en ce qu'**après la détermination de la position (p*) de référence, on déplace la broche (1) de l'outil au moyen des entraînements (8x, 8y, 8z) d'axe vers la position (p*) de référence, on rapproche ensuite le palpeur (14) de mesure de la bille (7) de calibrage dans la direction longitudinale de l'axe (4) de la broche au moyen des entraînements (8x, 8y, 8z) d'axe et on détecte une position de contact ultérieure de la broche (1) de l'outil par rapport à l'élément (6) de la machine-outil, dans laquelle le palpeur (14) de mesure touche la bille (7) de calibrage, et
- **en ce que** l'on tient compte de la position de contact ultérieure, dans le cadre du calibrage supplémentaire du palpeur (14) de mesure.

4. Procédé de calibrage suivant la revendication 3, **caractérisé**
- **en ce que** l'on effectue les quatre mesures supplémentaires après la détermination de la position ultérieure de contact et
- **en ce que**, pour effectuer les quatre mesures supplémentaires, on déplace transversalement à la direction longitudinale le palpeur (14) de mesure, en partant de la position de contact ultérieure, au moyen des entraînements (8x, 8y, 8z) d'axe, du rayon (R) de la bille (7) de calibrage dans la direction longitudinale de l'axe (4) de la broche, additionné d'un décalage suffisant de l'axe (4) de la broche et on le rapproche de la bille (7) de calibrage du rayon (R) de la bille (7) de calibrage, additionné d'un rayon (R) estimé du palpeur (14) de mesure.

5. Procédé de calibrage suivant l'une des revendications précédentes,
**caractérisé**
- **en ce qu'**après la détermination du rayon (r) réel du palpeur (14) de mesure et de son décalage (δp) par rapport à l'axe (4) de la broche, on déplace la broche (1) de l'outil au moyen des entraînements (8x, 8y, 8z) d'axe vers une position dans laquelle le palpeur (14) de mesure se trouve au milieu au-dessus de la bille (7) de calibrage, on rapproche ensuite le palpeur (14) de mesure, au moyen des entraînements (8x, 8y, 8z) d'axe, de la bille (7) de calibrage dans la direction longitudinale de l'axe (4) de la broche et on détecte une dernière position de contact de la broche (1) de l'outil par rapport à l'élément (6) de la machine-outil, dans laquelle le palpeur (14) de mesure touche la bille (7) de calibrage, et
- **en ce qu'**au moyen de la dernière position de contact, on en détermine la longueur (L), considérée dans la direction de l'axe (4) de la broche.

6. Procédé de calibrage suivant l'une des revendications précédentes,
**caractérisé**
- **en ce qu'**après la détermination du rayon (r) réel du palpeur (14) de mesure et de son décalage (δp) par rapport à l'axe (4) de la broche, on déplace le palpeur (14) de mesure au moyen des entraînements (8x, 8y, 8z) d'axe dans la direction longitudinale de l'axe (4) de la broche, de manière à ce qu'une ligne (23) de liaison reliant les centres (14', 7') du palpeur (14) de mesure et de la bille (7) de calibrage soit orthogonale à l'axe (4) de la broche,
- **en ce que** l'on effectue ensuite à nouveau les quatre mesures supplémentaires et
- **en ce qu'**à l'aide des quatre positions supplémentaires nouvelles, on détermine encore une fois le rayon (r) réel du palpeur (14) de mesure et son décalage (δp) par rapport à l'axe (4) de la broche.

7. Programme d'ordinateur qui comprend un code (11) machine, qui peut être exécuté directement par un dispositif (2) de commande d'une machine-outil et dont l'exécution par le dispositif (2) de commande fait que le dispositif (2) de commande exécute, en ce qui concerne un procédé de calibrage suivant l'une des revendications précédentes, automatiquement au moins les quatre mesures de base, détermine la position (p*) de référence, tient compte de la position (p*) de référence dans le cadre du calibrage supplémentaire du palpeur (14) de mesure, après la détermination de la position (p*) de référence, effectue les quatre mesures supplémentaires et détermine le rayon (r) du palpeur (14) de mesure et son décalage (δp) par rapport à l'axe (4) de la broche.

8. Programme d'ordinateur suivant la revendication 7,
**caractérisé en ce qu'**il est mémorisé sous une forme pouvant être exécutée par une machine sur un support de données.

9. Programme d'ordinateur suivant la revendication 8,
**caractérisé en ce que** le support (13) de données est constitué sous la forme d'un support (13) de données mobile.

10. Programme d'ordinateur suivant la revendication 8,
**caractérisé en ce que** le support (12) de données est constitué sous la forme d'une partie intégrante du dispositif (2) de commande.

11. Dispositif de commande d'une machine-outil,
**caractérisé en ce que** le dispositif de commande est programmé par un programme (10) d'ordinateur suivant la revendication 7.

12. Machine-outil,
- dans laquelle la machine-outil a une broche (1) d'outil, qui peut tourner autour de l'axe (4) de la broche au moyen d'un entraînement (3) de broche,
- dans laquelle la machine-outil a un élément (6), sur lequel une bille (7) de calibrage peut être fixée,
- dans laquelle la machine-outil a au moins trois axes (8x, 8y, 8z) d'entraînement, au moyen desquels la broche (1) de l'outil peut être mise en position par rapport à l'élément (6) de la machine-outil dans trois directions (x, y, z) en translation indépendantes les unes des autres,
- dans laquelle aux entraînements (8x, 8y, 8z) d'axe sont associés des indicateurs (9x, 9y, 9z) de position, au moyen desquels la position (p) de la broche (1) de l'outil par rapport à l'élément (6) de la machine-outil peut être détectée,
- dans laquelle la machine-outil a un dispositif (2) de commande suivant la revendication 11.
